**Europäisches Patentamt**

**European Patent Office**

**Office européen des brevets**

(19)

(11) Veröffentlichungsnummer : **0 326 849 B1**

(12)

# EUROPÄISCHE PATENTSCHRIFT

(45) Veröffentlichungstag der Patentschrift :
**30.09.92 Patentblatt 92/40**

(51) Int. Cl.$^5$ : **H01G 1/02, H01G 4/22**

(21) Anmeldenummer : **89100726.2**

(22) Anmeldetag : **17.01.89**

(54) Elektrischer Kondensator.

(30) Priorität : **27.01.88 DE 3802352**

(43) Veröffentlichungstag der Anmeldung :
**09.08.89 Patentblatt 89/32**

(45) Bekanntmachung des Hinweises auf die
Patenterteilung :
**30.09.92 Patentblatt 92/40**

(84) Benannte Vertragsstaaten :
**DE FR GB IT SE**

(56) Entgegenhaltungen :
**DE-A- 2 126 399**
**FR-A- 2 320 622**
**GB-A- 1 108 098**
**US-A- 4 626 959**

(73) Patentinhaber : **SIEMENS**
**AKTIENGESELLSCHAFT**
**Wittelsbacherplatz 2**
**W-8000 München 2 (DE)**

(72) Erfinder : **Solar, Josef, Dipl.-Ing.**
**Albert-Schweitzer-Strasse 51**
**W-7920 Heidenheim (DE)**

EP 0 326 849 B1

## Beschreibung

Die Erfindung betrifft einen elektrischen Kondensator, insbesondere Leistungskondensator, gemäß dem Oberbegriff des Patentanspruchs 1.

Ein derartiger Kondensator ist beispielsweise aus der DE-28 25 377 C2 bekannt.

Hierbei werden je nach Bedarf ein oder mehrere Wickel aufeinander, gegebenenfalls getrennt mit Zwischenkappen, gestapelt, entsprechend verschaltet und mit einer Unter- und einer Oberkappe abgeschlossen als Wickelpaket in Metallrohre eingeschoben. Diese Kondensatoren werden dann zur Verhinderung von Teilentladungen mit Öl imprägniert, wobei die Ölmenge nach der Imprägnierung so eingestellt wird, daß ein Gaspuffervolumen im Gehäuse vorhanden ist, aber der oberste Wickel samt Kappe unter dem Ölspiegel eingetaucht ist.

Dieses Gaspuffervolumen ist bei zylindrischen Gehäusen notwendig, um den Druckanstieg durch Materialausdehnung bei Temperaturerhöhung aufzunehmen, da die Wand des Gehäuses nicht nachgibt. Das Nachgeben von Boden und Deckel reicht nämlich nicht aus, da beide nur einen sehr kleinen Oberflächenanteil aufweisen.

Ferner darf sich die Gasblase aber nur oberhalb der Wickel befinden, wo die Isolation dafür ausgelegt ist.

Die Durchschlagsfestigkeit eines festen Isolators liegt größenordnungsmäßig bei ca. 200 V/μm, eines flüssigen bei ca. 20 V/μm, während sie bei Gasen nur ca. 2 V/μm beträgt. Um dieses Verhältnis wird demnach die Isolation Belag/Gehäuse schwächer, wenn die Gasblase das Imprägnieröl an einer gefährdeten Stelle verdrängt.

Da die Kondensatoren beispielsweise beim Transport waagerecht gelagert werden, besteht die Gefahr, daß bei erneutem Aufstellen die Gasblase unter die obere Kappe einwandert und im ungünstigsten Fall das Gesamtvolumen unter der Kappe ausfüllt. Ein Auswandern ist nicht mehr möglich, so daß sich die obere Schoopschicht nicht unter Öl befindet und an der Außenkante unter der Kappe zum Gehäuse bei Wechselspannungen > 1 kV Teilentladungen entstehen können.

Diese Teilentladungen lassen sich beispielsweise dadurch feststellen, daß die Kapazität $C_{BG}$ zwischen kurzgeschlossenen Belägen und Gehäuse gemessen wird. Bei Prüfspannungen $U_p$ wird dann der Strom ermittelt. Ist er größer, als es der Kapazität nach der Formel $Ip = U_p \cdot \omega \cdot C_{BG}$ ($\omega$ = Frequenz der Prüfspannung) entspricht, deutet dies auf Teilentladungen hin.

Zur Behebung der geschilderten Schwierigkeiten hat man bisher versucht, die Außenkanten der Stirnkontaktschichten von der Endleerwindungsschicht abzuschleifen oder abzufeilen bzw. durch Aufwickeln von 1 bis 3 μm dicker Bandage aus Papier oder Kunststoff den Abstand zum Gehäuse zu vergrößern.

Trotz aller dieser Maßnahmen ließ es sich nicht verhindern, aus wirtschaftlichen Gründen eine bis zu 3-fache Erhöhung des Isolationsstroms durch Teilentladungen hinzunehmen.

Aufgabe der Erfindung ist es, einen elektrischen Kondensator der eingangs genannten Art anzugeben, bei dem Teilentladungen in der Isolation Belag/Gehäuse völlig vermieden werden.

Diese Aufgabe wird durch einen Kondensator mit den Merkmalen des Anspruchs gelöst.

Mit dem Gegenstand der Erfindung wird der Vorteil erzielt, daß unter die Isolierkappe eingewanderte Gasblasen durch das Entlüftungsloch entweichen können, so daß auch die obere Stirnkontaktschicht des Kondensators vollständig von Isolieröl bedeckt ist.

Aus der DE-A-21 26 399 ist zwar ein Kondensator bekannt, dessen Zentrierkappe Aussparungen und Einprägungen besitzt, die zum Durchtritt von Schmorgasen zur Deckelseite dienen. Dieser Ausgestaltung liegt jedoch eine andere Problematik zugrunde, da der Kondensator nicht imprägniert ist, das heißt also auch kein Puffervolumen besitzt, und die Schmorgase zum Ansprechen einer Sicherheitsvorrichtung dienen.

Die Erfindung wird anhand des folgenden Ausführungsbeispiels näher erläutert.

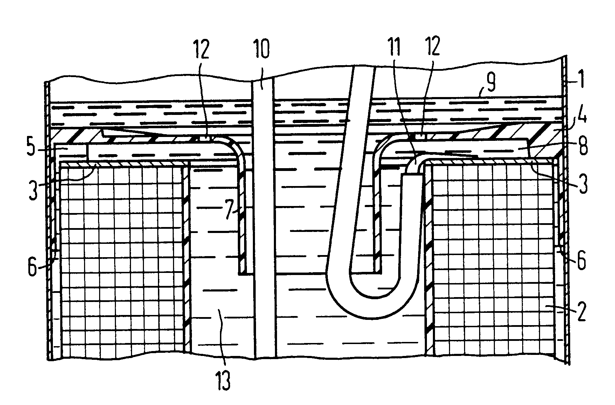

In der dazugehörenden einzigen Figur der Zeichnung ist in Prinzipdarstellung und nicht maßstabsgetreu ein Kondensator in teilweise geschnittener Ansicht dargestellt.

In der FIG ist nur der obere Abschnitt des Kondensators dargestellt. Ein Kondensatorwickel 2 besitzt eine obere Stirnkontaktschicht 3. Der Wickel 2 wird durch eine Isolierkappe 4, die am Rand Andruckrippen 5 besitzt in einem metallischen Gehäuse 1 festgelegt. Die Isolierkappe 4 besitzt an der Außenseite Ansätze 6 zur Isolierung des Kondensators 2 gegenüber dem Gehäuse 1. An der Innenseite der Isolierkappe 4 ist ein Stutzen 7 angeordnet, der in ein Kernloch 13 des Kondensators 2 hineinreicht. Das Gehäuse 1 ist mit einem Isolieröl bis zu einem Niveau 9 derart gefüllt, daß zumindest die Stirnkontaktschicht 3 ölbedeckt ist.

Die Isolierkappe 4 ist derart ausgebildet, daß neben den am Rande angeordneten Andruckrippen weiter zur Mitte ein Raum 8 entsteht, in dem das an die Stirnkontaktschicht 3 angelötete bzw. angeschweißte Anschlußelement 11 genug Platz findet. Der innere Stutzen (Dom) 7 weist die erforderliche Länge auf, um das andere Anschlußelement 10 von der anders gepolten Stirnkontaktschicht 3 zu isolieren.

Die Isolierkappe 4 ist derart konstruiert, daß in Richtung Mitte am Fuße des inneren Stutzens 7 der höchste Punkt erreicht wird, um an dieser Stelle die Entlüftungslöcher 12 zu positionieren.

Es genügt zwar im Prinzip die Anordnung eines einzigen Entlüftungsloches, Da die Hohlräume der Kappe miteinander in Verbindung stehen, jedoch ist bei einer derartigen Anordnung eine sichere Entlüftung nur bei exakt senkrechter Betriebsweise des Kondensators gewährleistet. Bei einer leichten Verkantung läßt sich eine Gasblase nicht in jedem Fall vermeiden, wenn sich nämlich das Entlüftungsloch an der niedriger liegenden Seite der Isolierkappe befindet. Aus diesem Grund ist es zweckmäßiger, auf jeden Fall mehrere Entlüftungslöcher 12 anzuordnen.

Versuche mit der erfindungsgemäß ausgestalteten Isolierkappe haben ergeben, daß der aus der Belag/Gehäuse-Kapazität berechnete Isolationsstrom auch bei 3-fach höherer Prüfspannung (bis zu 12 kV) nicht erhöht wurde. Dabei wurde auch bei oszillographischer Beobachtung des Isolationsstromes keine Verzerrung festgestellt.

Der Gegenstand der Erfindung weist somit eine Teilentladungsfreiheit der Belag/Gehäuse-Isolation auf, ohne daß zusätzliche Maßnahmen bei der Fertigung (teueres Schleifen, Bandagieren) erforderlich sind.

**Patentansprüche**

1.　Elektrischer Wickelkondensator, insbesondere Leistungskondensator, mit folgenden Merkmalen:
a) der Kondensator (2) besitzt Stirnkontaktschichten (3);
b) die Stirnkontaktschichten (3) sind mit Anschlußelementen (10, 11) versehen;
c) der Kondensator (2) ist in ein metallisches Gehäuse (1) eingebaut;
d) im Inneren des Gehäuses (1) ist eine Isolierkappe (4) angeordnet;
e) die Isolierkappe (4) besitzt am Rand Andruckrippen (5) zur Festlegung des Kondensators (2);
f) die Isolierkappe (4) bildet zur Mitte einen Raum (8) zur Aufnahme der Anschlußelemente (11);
g) an der Außenseite der Isolierkappe (4) sind Ansätze (6) zur Isolierung des Kondensators (2) gegenüber dem Gehäuse (1) angeordnet;
h) an der Innenseite der Isolierkappe (4) ist ein Stutzen (7) angeordnet, der in ein Kernloch (13) des Kondensators (2) hineinreicht;
i) das Gehäuse (1) ist mit einem Isolieröl bis zu einem Niveau (9) derart gefüllt, daß zumindest die Stirnkontaktschichten (3) ölbedeckt sind;
**gekennzeichnet**, durch folgende Merkmale:
j) auf der Oberseite der Isolierkappe (4) ist zumindest ein Entlüftungsloch (12) angeordnet;
k) die Isolierkappe (4) weist am Fuß des Stutzens (7) den größten Abstand von der Schoopschicht (3) auf;
l) die Entlüftungslöcher (12) sind an der Stelle des größten Abstandes zwischen Isolierkappe (4) und Stirnkontaktschicht (3) angeordnet.

**Claims**

1.　Electrical wound capacitor, preferably a power capacitor, having the following features:
a) the capacitor (2) has end contact layers (3);
b) the end contact layers (3) are provided with connecting elements (10, 11);
c) the capacitor (2) is installed in a metallic housing (1);
d) an insulating cap (4) is arranged inside the housing (1);
e) on the edge, the insulating cap (4) has compression ribs (5) for fixing the capacitor (2);
f) towards the centre, the insulating cap (4) forms a space (8) for holding the connecting elements (11);
g) projections (6) for insulation of the capacitor (2) with respect to the housing (1) are arranged on the outside of the insulating cap (4);
h) a connecting piece (7), which reaches into a core hole (13) of the capacitor (2), is arranged on the inside of the insulating cap (4);
i) the housing (1) is filled with an insulating oil up to a level (9) in such a manner that at least the end contact layers (3) are covered with oil;
characterised by the following features:
j) at least one venting hole (12) is arranged on the top of the insulating cap (4);
k) the insulating cap (4) is at the maximum distance from the sprayed metal layer (3) at the foot of the connecting piece (7);
l) the venting holes (12) are arranged at the point of the greatest distance between the insulating cap (4) and the end contact layer (3).

**Revendications**

1. Condensateur électrique enroulé, notamment condensateur de puissance, présentant les caractéristiques suivantes :

a) le condensateur (2) possède des couches de contact frontaux (3);

b) les couches de contact frontaux (3) sont pourvues d'éléments de raccordement (10,11);

c) le condensateur (2) est monté dans un boîtier métallique (1);

d) un capot isolant (4) est disposé à l'intérieur du boîtier (1);

e) le capot isolant (4) possède, sur son bord, des nervures de serrage (5) servant à fixer le condensateur (2);

f) le capot isolant (4) forme, en son centre, un espace (8) servant à loger les éléments de raccordement (11);

g) sur la face extérieure du capot isolant (4), il est prévu des appendices saillants (6) servant à isoler le condensateur (2) par rapport au boîtier (1);

h) sur la face intérieure du capot isolant (4) est disposé un embout (7), qui pénètre dans un trou (13) du noyau du condensateur (2);

i) le boîtier (1) est rempli par une huile isolante jusqu'à un niveau (9) pour qu'au moins les couches de contact frontaux (3) soient recouvertes d'huile;

caractérisé par les particularités suivantes :

j) au moins un trou d'aération (10) est ménagé dans la surface supérieure du capot isolant (4);

k) à la base de l'embout (7), la distance entre le capot isolant (4) et la couche de chopage (4) est maximale;

l) les trous d'aération (12) sont disposés à l'emplacement où la distance entre le capot isolant (4) et la couche de contact frontale (3) est maximale.